# EUROPEAN PATENT APPLICATION

(11) **EP 1 868 379 A2**
(43) Date of publication of application: **19.12.2007**
(21) Application number: 07104746.8
(22) Date of filing: 23.03.2007
(51) Int. Cl.: H04N 5/44

(54) **Providing an external input list using item grouping and for a video apparatus**

(30) Priority: 14.06.2006 KR 20060053340
(71) Applicant: Samsung Electronics Co., Ltd., Suwon-si, Gyeonggi-Do (KR)
(72) Inventor: Lee, Sang-hee, Seoul (KR); Kim, Dae-gu, Seoul (KR); Yim, Jin-ho, Gyeonggi-do (KR); Lee, Dong-heon, Seoul (KR); Kim, Won-il, Chungcheongbuk-do (KR)
(74) Representative: Walaski, Jan Filip

(57) **Abstract**

A method of providing an external input list using item grouping and a video apparatus adopting the same are disclosed. The video apparatus includes a combination unit (135) combining an image to be displayed with specified information, and a control unit (160) creating an external input list including at least one external input group item to which at least one external input item is subordinate as a lower item, and controlling the combination unit to combine the image to be displayed with the created external input list. Accordingly, more simplified external input list is provided to a user and the user can select the external input more quickly and conveniently.

## Description

The present invention relates to providing an external input list, and more particularly, to providing an external input list and performing grouping of external input items listed in the external input list that is provided to a user through a display screen of a video apparatus.

Recently, the performance of a video apparatus (e.g., a television receiver (TV)) has been highly diversified and complicated, and the video apparatus can be connected with more external devices. Further, with the advent of interfaces such as USB and IEE 1394, it becomes possible to connect an input terminal with several external devices.

Accordingly, the number of external inputs is increased, and thus, an external input list provided to a user through a display screen becomes longer. This is caused by the fact that an external input is displayed as an item in the external input list.

If the external input list is lengthened, the user should manipulate several keys in order to select a desired external input, and thus it takes a lot of time in selecting the external input, thereby causing user inconvenience.

Consequently, it would be desirable to provide a scheme for enabling a user to select an external input more promptly and more conveniently.

The present invention provides a method of providing an external input list and a video apparatus adopting the same, which can perform grouping of external input items listed in the external input list that is provided to a user through a display screen, thereby enabling a user to quickly and conveniently select an external input on the basis of the simplified external input list.

The foregoing and other aspects and advantages are substantially realized by providing a video apparatus, according to the present invention, which includes a combination unit which combines an image to be displayed with specified information, and a control unit which creates an external input list comprising at least one external input group item, the at least one external input group item comprising at least one external input item and which controls the combination unit to combine the image to be displayed with the created external input list.

The external input item may be item which designates an external input to be provided in accordance with a connection system corresponding to the external input.

The connection system may include at least one of a USB connection system, an IEEE 1394 connection system, a wireless communication connection system, and a memory card connection system.

The at least one external input item is an item which designates an External input may be transmitted to the video apparatus via an input terminal of the video apparatus.

The video apparatus may further include a display for displaying an image combined with the at least one external input list.

In another aspect of the present invention there is provided a method of providing an external input list, which includes creating the external input list including at least one external input group item , the at least one external input group item comprising at least one external input item, and combining the created external input list with an image to be displayed.

The at least one external input item may be items designating an external input corresponding to a connection system.

The connection system may include at least one of a USB connection system, an IEEE 1394 connection system, a wireless communication connection system, and a memory card connection system.

The at least one external input item is an item designating an External input may be transmitted to a video apparatus via one input terminal of the video apparatus.

The method may further include displaying an image combined with the external input list.

In still another aspect of the present invention, there is provided a method of providing a list, which includes creating an image source list sequenced with internal input items to be input from an internal image source in a video apparatus and external input items to be input from an external device connected to an external input terminal of the video apparatus, and combining the created image source list with an image to be displayed.

The creating step may select a display order so that the display order of the internal input item precedes a display order of the external input item.

The above and other aspects of the present invention will be more apparent by describing certain exemplary embodiments of the present invention with reference to the accompanying drawings, in which:
Figure 1 is a block diagram illustrating the construction of a video apparatus according to an embodiment of the present invention;
Figure 2 is a view illustrating an example of an external input connection state table;
Figure 3 is a flowchart illustrating a process of providing an external input list using item grouping according to an embodiment of the present invention;
Figure 4 and Figures 5A to 5C are views explaining one process of providing an external input list;
Figures 6A and 6B are views explaining another process of providing an external input list;
Figure 7 is a view illustrating an example of an image source list;
Figure 8 is a flowchart illustrating a process of providing an external input list using item grouping according to another exemplary embodiment of the present invention; and
Figure 9 is a flowchart illustrating a process of providing an image source list using item grouping according to another exemplary embodiment of the present invention.

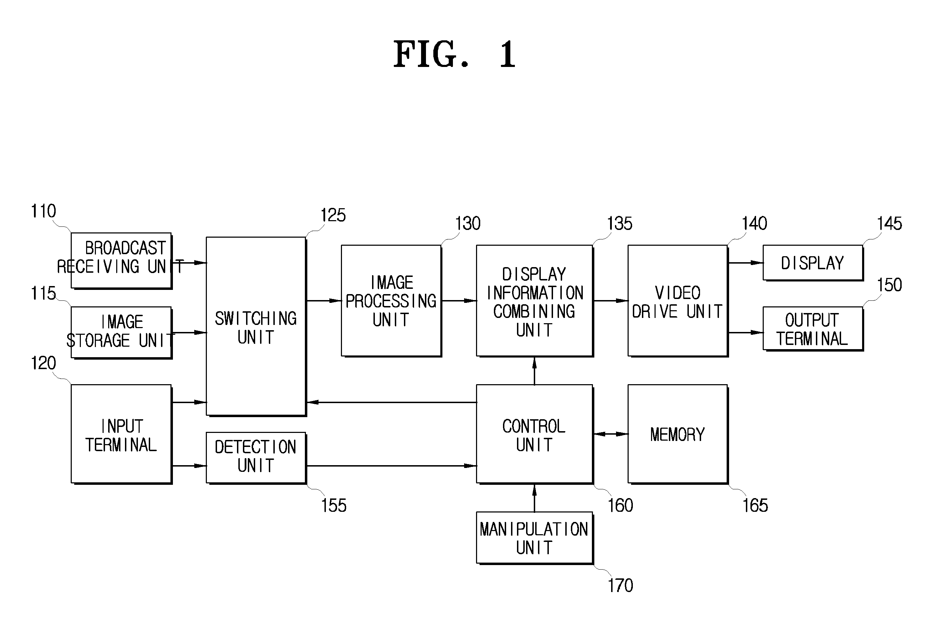

Figure 1 is a block diagram illustrating the construction of a video apparatus according to an embodiment of the present invention. The video apparatus according this embodiment displays an external input list on a screen so as to enable a user to refer to the external input list. In this instance, external input items listed in the external input list can be grouped. Grouping of the external input items can be set depending upon the connection system with the video apparatus. That is, the external input items that are connected to the video apparatus through the same connection system, can be grouped into one group.

As shown in Figure 1, the video apparatus includes a broadcast receiving unit 110, an image storage unit 115, an input terminal 120, a switching unit 125, an image processing unit 130, a display information combining unit 135, a video drive unit 140, a display 145, an output terminal 150, a detection unit 155, a control unit 160, a memory 165, and an manipulation unit 170.

The broadcast receiving unit 110 tunes and demodulates TV broadcast. The image storage unit 115 stores an image or reads the stored image. The image storage unit 115 may include various recording media as image storage means. A typical example of the recoding medium is a hard disk drive (HDD).

The input terminal 120 is provided with several input terminals. Specifically, the input terminal 120 may be provided with a composite input terminal, a component input terminal, an S-video input terminal, a high definition multimedia interface (HDMI) input terminal, a universal serial bus (USB) input terminal, an IEEE 1394 input terminal, and other types of input terminals. In this instance, a number of the same kind of input terminals may be provided. That is, the number of composite input terminals provided in the input terminal 120 may be two, and the number of component input terminals may be two.

A USB input terminal may be connected with several USB devices via a USB hub. Further, an IEEE 1394 input terminal may be connected in series with up to 64 IEEE 1394 devices.

The input terminal 120 may be provided with a wireless input terminal, as well as a cable input terminal. An example of the wireless input terminal is a Bluetooth communication module receiving external inputs from Bluetooth devices. A Bluetooth communication module may be connected with several Bluetooth devices.

In addition, a multi-memory slot may be provided as an input terminal provided on the input terminal 120. The multi-memory slot is an input terminal for receiving a data from mounted memory cards. The multi-memory slot is provided with slots in which a compact flash (CF) card, a memory stick (MS), a secure digital (SD) card, a smart media (SM) card, and other removable media are mounted. The memory cards are connected with the video apparatus via these slots.

The switching unit 125 is switched to transmit any one of images to be output from the broadcast receiving unit 110, the image storage unit 115, and the input terminal 120 to the video processing unit 130. The switching operation of the switching unit 125 is controlled by the control unit 160.

The image processing unit 130 processes the image received from any device through the switching unit 125.

The display information combining unit 135 combines the image to be output from the image processing unit 130 with display information such as characters, symbols, figures, graphics, or the like. In this instance, the display information combining unit 135 can perform the combination of the display information through an onscreen display (OSD) manner. The combining operation of the display information combining unit 135 is controlled by the control unit 160.

The video drive unit 140 displays the image combined with the display information to be output from the display information combining unit 135 or transmits the image to the external device connected to the apparatus via the output terminal 150.

The detection unit 155 detects whether the external device is connected with the input terminal provided on the input terminal 120, and notifies the control unit 160 of the detected result. For example, if the USB device is connected with the USB input terminal provided on the input terminal 120, the detection unit 155 detects the connection system, and notifies the control unit 160 of the fact that the USB device is connected with the USB input terminal.

The control unit 160 controls the operation of the video apparatus in accordance with a user's manipulation command to be input from the manipulation unit 170. In particular, the control unit 160 updates an external input connection state table on the basis of the detected result notified from the detection unit 155, and stores the updated external input connection state table in the memory 165.

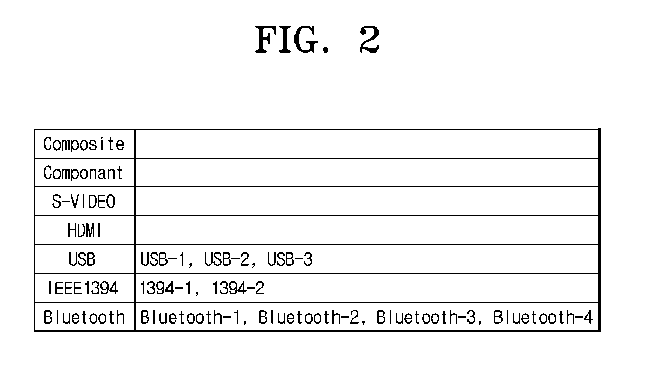

The external input connection state table is a table indicating the input terminals provided on the input terminal 120 and the external devices presently connected with each input terminal, to which a plurality of external devices can be connected, among the input terminals. Figure 2 is a view depicting an example of the external input connection state table.

It is to be noted that Figure 1 shows one of the exemplary embodiments of the present invention, and therefore, the video apparatus of the present invention may not include all the blocks as shown in Figure 1. For example, the video apparatus may include a combination unit to combine information with the images to be displayed, and a control unit 160 to generate an external input list containing at least one external input group item each having at least one sub-item, and controls the combining unit to combine the generated external input list with the image to be displayed.

In the case of the USB input terminal, the IEE 1394 input terminal, and the Bluetooth terminal among the input terminals indicated in the external input connection state table depicted in Figure 2, several external devices can be connected with one input terminal.

It will be understood from Figure 2 that the USB input terminal is connected with three USB devices (i.e., USB-1, USB-2, and USB-3), the IEEE 1394 input terminal is connected with two IEEE 1394 devices (i.e., IEEE 1394-1 and IEEE 1394-2), and the Bluetooth input terminal is connected with four Bluetooth devices (i.e., Bluetooth-1, Bluetooth-2, Bluetooth-3, and Bluetooth-4).

The control unit 160 creates an external input list on the basis of the external input connection state table stored in the memory 165. The control unit 160 controls the display information combining unit 135 so as to provide the screen with the created external input list.

In creating the external input list, the control unit 160 can group some of the external input items among the external input items listed in the external input list. In this instance, the control unit 160 can represent the external input items that are connected to the video apparatus through the same connection system, as an external input group item.

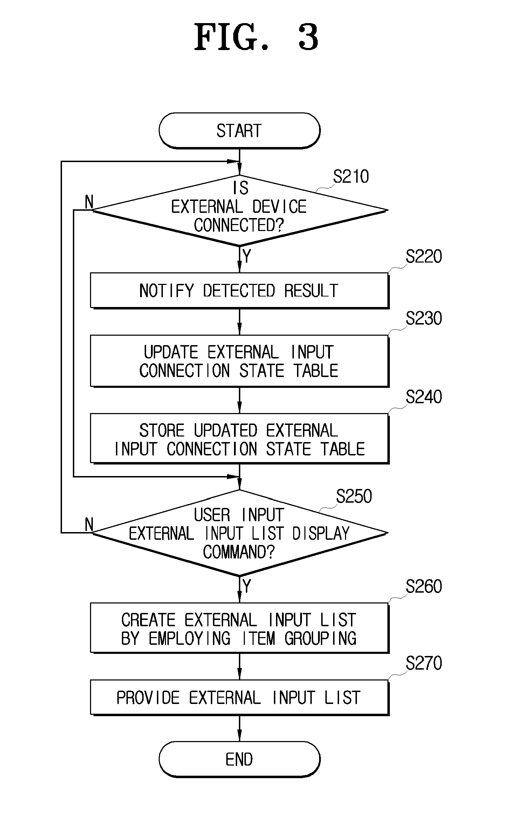

The process of providing the external input list will now be described in detail with reference to Figure 3. Figure 3 is a flowchart illustrating the process of providing the external input list according to an embodiment of the present invention.

As shown in Figure 3, if it is detected that the input terminals provided on the input terminal 120 are connected with the external device ("Yes" in S210), the detection unit 155 notifies the control unit 160 of the detected result (S220). The control unit 160 updates the external input connection state table on the basis of the detected result notified from the detection unit 155 (S230), and stores the updated external input connection state table in the memory 165 (S240).

Then, if the user inputs an external input list display command through the manipulation unit 170 ("Yes" in S250), the control unit 160 creates the external input list on the basis of the external input connection state table stored in the memory 165 (S260). Then, the control unit 160 controls the display information combining unit 135 so as to display the created external input list on the screen (S270). Thus, the image combined with the external input list is displayed on the display 145.

In creating the external input list in step S260, the control unit 160 represents external input items that are connected to the video apparatus through the same connection system, as an external input group item. That is, when the external input list is created, the control unit 160 groups the external input items having the same connection system with the video apparatus, as an external input group item.

As such, several external input items connected to the video apparatus through the same connection system, are subordinated as lower items in an external input group item.

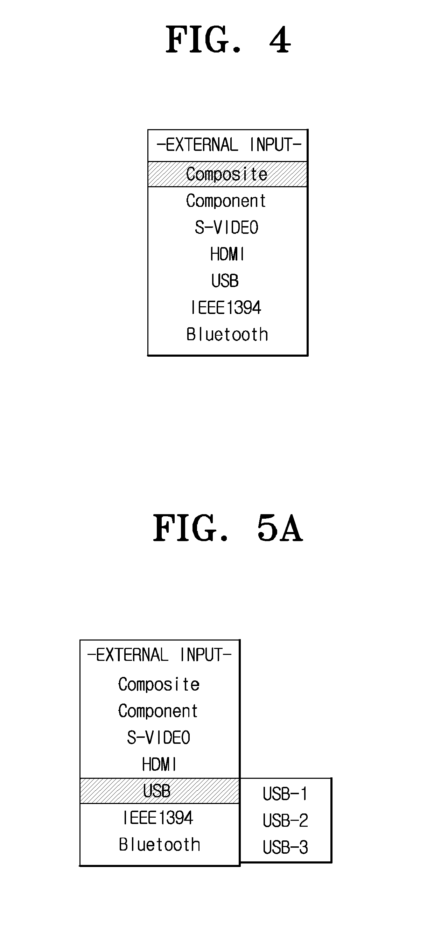

Figure 4 shows the external input list prepared in operation S260, in the case where the external input connection state table is the same as that as shown in Figure 2. The USB item, IEEE 1394 item, and Bluetooth item in the external input list correspond to the external input group item. This is because i) the USB-1 item, the USB-2 item, and the USB-3 item are subordinate to the USB item as lower items, ii) the 1394-1 item and the 1394-2 item are subordinate to the IEEE 1394 item as lower items, and iii) the Bluetooth-1 item, the Bluetooth-2 item, and the Bluetooth-3 item are subordinate to the Bluetooth item as lower items.

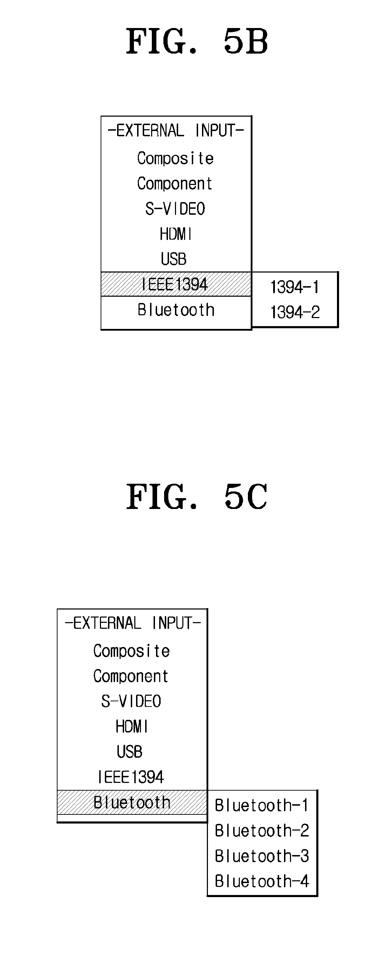

Although the lower items are not shown on the external input list depicted in Figure 4, the items are displayed on the screen when a cursor is positioned on the corresponding superior item thereof, which is shown in Figures 5A to 5C.

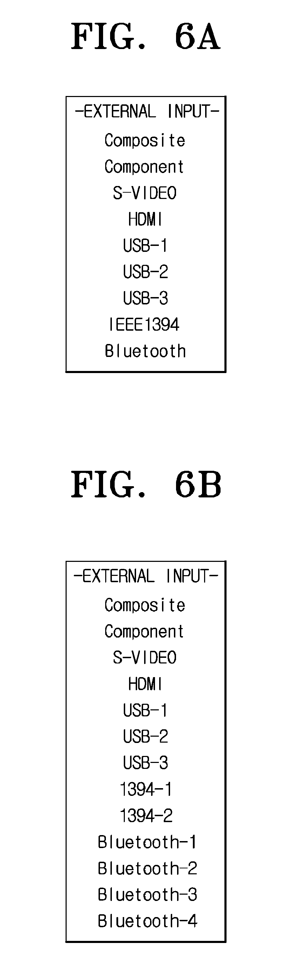

Figure 6A shows the external input list that the USB-1 item, the USB-2 item, and the USB-3 item which are subordinate to the USB item are listed in a different manner from that shown in Figure 5A.

Further, as shown in Figure 6B, it is possible to indicate all of items subordinate to the USB item, the IEEE 1394 item, and the Bluetooth item in the external input list.

In this embodiment, one input terminal is connected with several external devices. If several external inputs are input through one input terminal, the process of representing the items indicative of the external input as a superior item has been described hereinbefore with reference to the exemplary embodiment.

In addition, if the external inputs are connected to the video apparatus through the same connection system, it is possible to represent the external inputs as an external input group item even though the input terminals are different from each other.

For example, if the video apparatus has two component input terminals (e.g., Component-1 and Component-2), two external inputs to be input from the two component input terminals may be represented as one item (i.e., component).

Further, if the video apparatus has two USB input terminals, four external inputs to be input from four USB devices connected with the apparatus via one USB input terminal and three external inputs to be input from three USB devices connected with the apparatus via the other USB input terminal may be indicated as one item (i.e., USB).

In addition, the external inputs to be input from the memory cards (e.g., CF card, MS, SD card, and SM card) connected with the apparatus via the multi-memory slots may be indicated as one item (e.g., MMS).

Although the external input list is described by way of an example in this embodiment, the present invention is not limited thereto. The present invention can also be applied to a video source list in which internal input items and external input items are listed together.

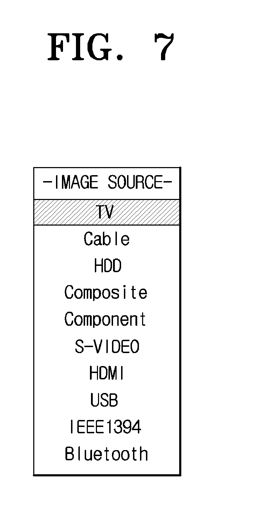

Figure 7 is a view illustrating an example of an image source list sequenced with the external input item. The image source providing the internal input means a module provided in the video apparatus for providing an image, such as the broadcast receiving unit 110, the image storage unit 115, which are shown in Figure 1, and a cable broadcast receiving unit (not shown). It is noted that the internal inputs listed in the image source list can be applied to the above item grouping.

The display order of internal inputs (e.g., TV, cable, HDD, and others) may precede a display order of the external inputs (composite, component, Bluetooth, or the like). Since the internal input is frequently used as the image source, rather than the external input, the display order of the internal inputs may precede that of the external inputs so as to the user to conveniently select it, as shown in Figure 7. However, the present invention is not limited thereto, and the display order may be changed.

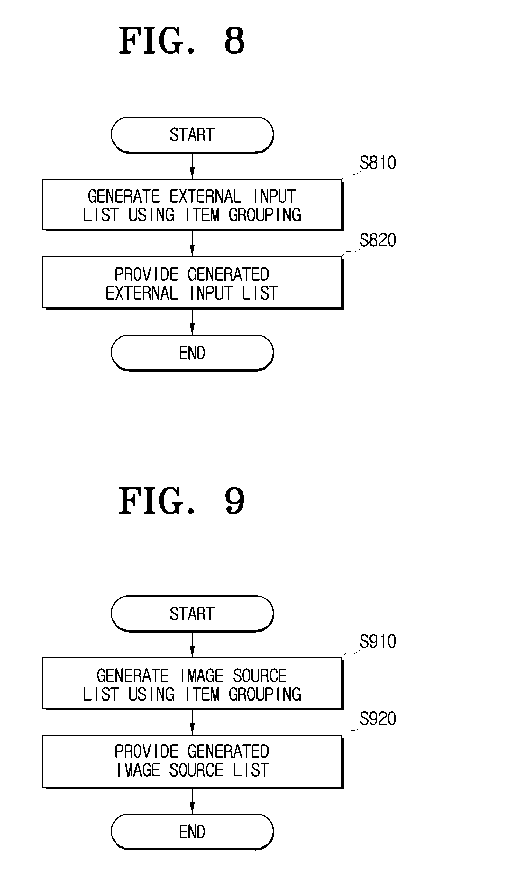

Figure 8 is a flowchart illustrating a process of providing an external input list using item grouping according to another exemplary embodiment of the present invention.

As shown, the controller 160 generates an external input list containing at least one external input group item each having at least one sub-item, using the external input connection state table in the memory 165 (S810). The controller 160 then controls the display information combining unit 135 to combine the generated external input list with the image to be displayed and display the result on the screen (S820).

Figure 9 is a flowchart illustrating a process of providing an image source list using item grouping according to another exemplary embodiment of the present invention.

As shown, the controller 160 generates an image source list containing input and output items, using internal inputs provided from an internal image source of the video apparatus and the external input connection state table stored in the memory 165 (S910). The controller 160 then controls the display information combining unit 135 to combine the generated external input list with the image to be displayed and display the result on the screen (S920).

The video apparatus shown in Figure 1 corresponds to an exemplary embodiment, but the video apparatus to which the present invention is applied need not include all blocks shown in Figure 1 and unnecessary blocks may be removed. For example, if the video apparatus is a set top box, the display 145 may be removed from the apparatus.

As described above, according to the present invention, the external input items listed in the external input list can be grouped, thereby providing the user with the external input list which is more simplified. As such, although the external input list is lengthened due to the increased number of input terminals and the increased number of external devices, the user can quickly and conveniently select the external input.

The foregoing embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A video apparatus comprising:
a combination unit (135) which combines an image to be displayed with specified information; and
a control unit (160) which creates an external input list comprising at least one external input group item, the at least one external input group item comprising at least one external input item (120) for the apparatus, and which controls the combination unit to combine the image to be displayed with the created external input list.

2. The video apparatus of claim 1, wherein the at least one external input item is an item which designates an external input to be provided in accordance with a connection system corresponding to the external input.

3. The video apparatus of claim 2, wherein the connection system includes at least one of a USB connection system, an IEEE 1394 connection system, a wireless communication connection system, and a memory card connection system.

4. The video apparatus of any preceding claim, wherein the at least one external input item is an item which designates an external input to be transmitted to the video apparatus via one input terminal of the video apparatus.

5. The video apparatus of any preceding claim, further comprising a display (145) which displays an image combined with the at least one external input list.

6. A method of providing an external input list, comprising:
creating the external input list comprising at least one external input group item, the at least one external input group item comprising at least one external input item; and
combining the created external input list with an image to be displayed.

7. The method of claim 6, wherein the at least one external input item is an item designating an external input corresponding to a connection system.

8. The method of claim 7, wherein the connection system includes at least one of a USB connection system, an IEEE 1394 connection system, a wireless communication connection system, and a memory card connection system.

9. The method of claim 6, 7 or 8 wherein the at least one external input item is an item designating an external input to be transmitted to a video apparatus via one input terminal of the video apparatus.

10. The method of any one of claims 6 to 9 further comprising displaying an image combined with the external input list.

11. A method of providing a list, the method comprising:
creating an image source list sequenced with internal input items to be input from an internal image source in a video apparatus and external input items to be input from an external device connected to an external input terminal of the video apparatus; and
combining the created image source list with an image to be displayed.

12. The method of claim 11, wherein the creating selects a display order so that the display order of the internal input items precedes the display order of the external input items.
